# FASCICULE DE BREVET EUROPEEN

(11) **EP 1 370 388 B1**
(45) Date de publication et mention de la délivrance du brevet: **29.08.2007**
(21) Numéro de dépôt: 02706832.9
(22) Date de dépôt: 05.02.2002
(51) Int. Cl.: B23K 11/31

(54) **DISPOSITIF D'ENTRAINEMENT ET OUTIL DE SERRAGE EQUIPE D'UN TEL DISPOSITIF**
VORRICHTUNG ZUM ANTREIBEN UND DAMIT HERGESTELLTES SPANNWERKEUG
DRIVING DEVICE AND CLAMPING TOOL EQUIPPED WITH SAME

(30) Priorité: 22.03.2001 FR 0103896
(43) Date de publication de la demande: 17.12.2003
(73) Titulaire: Salesse, Christian, 07100 Annonay (FR); Loriot, Jean-Marc, F-75015 Paris (FR)
(72) Inventeur: Salesse, Christian, 07100 Annonay (FR); Loriot, Jean-Marc, F-75015 Paris (FR)
(74) Mandataire: Bezault, Jean
(86) Numéro de dépôt international: PCT/FR2002/000444
(87) Numéro de publication internationale: WO 2002/076665

(56) Documents cités:
- EP-A- 1 057 569
- DE-U- 20 002 630
- GB-A- 2 261 081

## Description

L'invention concerne un dispositif d'entraînement propre à assurer le déplacement relatif de deux organes, en particulier des deux organes d'un outil.

Elle vise plus particulièrement à répondre aux impératifs de motorisation d'un axe faisant partie d'un outil, et en particulier d'un outil de serrage tel qu'une pince ou une tenaille.

Parmi les outils de serrage de ce genre, un exemple typique est celui des pinces à souder que l'on utilise notamment sur les chaînes d'assemblage des véhicules automobiles. Ces pinces sont destinées à serrer plusieurs tôles entre elles en vue de leur soudage électrique.

Dans tous les cas, ces pinces doivent permettre de réaliser, grâce à une motorisation appropriée, le déplacement relatif de deux organes, ici les deux bras ou mâchoires d'une pince, avec deux mouvements ou phases différents.

En effet, lors du serrage, il est souhaitable de pouvoir déplacer les deux organes, d'abord avec un mouvement rapide, puis ensuite avec un mouvement plus lent jusqu'au serrage final.

Il est connu pour cela d'effectuer le mouvement relatif des deux organes par des vérins actionnés par un fluide, et notamment par des vérins hydrauliques.

Cependant, ces outils de serrage qui utilisent des vérins présentent les inconvénients inhérents à de tels vérins, notamment des risques de fuite, etc.

On connaît aussi des outils de serrage électriques, en particulier des pinces électriques, qui utilisent une motorisation électrique pour réaliser le déplacement relatif des deux organes de l'outil.

Cependant, ces outils électriques souffrent des problèmes liés aux caractéristiques de motorisation électrique, à savoir soit des cadences d'ouverture et de fermeture élevées et peu d'effort de serrage, soit au contraire un effort de serrage élevé et des cadences faibles.

Or, dans les outils de serrage du type précité, il est impératif, compte tenu des cadences de plus en plus élevées utilisées dans l'industrie, de pouvoir déplacer les organes avec une vitesse élevée tout en appliquant un effort de serrage élevé.

Ces deux impératifs, à savoir cadences d'ouverture et de fermeture élevées et effort de serrage élevé, ne peuvent être obtenus avec les solutions connues, même avec des motorisations utilisant des moteurs électriques sans balai.

En fait, ces deux impératifs ne sont pas compatibles, car ils relèvent de deux définitions cinématiques contradictoires, à savoir :
- une forte charge inertielle (cas de l'ouverture et de la fermeture de la pince) qui implique un rapport d'inertie charge-moteur bien défini, et donc un rapport de réduction donné, et
- une forte charge de poussée qui définit généralement un rapport de réduction supérieur au rapport de réduction défini précédemment, afin d'amplifier l'effort généré par le couple du système de motorisation utilisé.

Cette forte charge de poussée est nécessaire pour réaliser le mouvement de serrage final, par exemple le serrage de plusieurs tôles par une pince à souder.

On connaît aussi des dispositifs d'indexation qui utilisent des vis à pas variable ou des cames pour procurer un rapport de réduction variable. Toutefois, ces dispositifs connus sont lourds et ont une inertie importante qui les rend inadaptés à une application destinée à un outil portable, ou outil mobile, et auquel on demande des performances élevées, donc une faible inertie. Le document GB-A-2 261 081 décrite un dispositif d'entraînement comportant les caractéristiques du préambule de la revendication 1.

L'invention a notamment pour but de surmonter les inconvénients précités.

Elle vise, en particulier, à procurer un dispositif d'entraînement pour le déplacement relatif de deux organes qui soit propre à fournir un rapport cinématique variable.

L'invention vise aussi à procurer un tel dispositif d'entraînement qui est susceptible d'être commandé électriquement par un système à commande numérique.

C'est aussi un but de l'invention de procurer un tel dispositif d'entraînement qui trouve une application particulière dans le domaine des outils, et notamment des outils de serrage.

C'est encore un autre but de l'invention de procurer un tel dispositif d'entraînement qui s'applique tout particulièrement aux pinces à souder.

L'invention propose à cet effet un dispositif d'entraînement du type défini en introduction, lequel comprend :
une vis d'un pas donné propre à être entraînée en rotation autour d'un axe, dans un sens ou dans un sens opposé, sous l'action d'un moteur,
un écrou coopérant avec la vis et propre à être entraîné en translation dans la direction de l'axe de la vis, ledit écrou étant solidaire en translation de l'un des deux organes,
des premiers moyens de guidage définissant un guidage linéaire parallèle à l'axe de la vis pour bloquer la rotation de l'écrou dans une première phase de déplacement de l'écrou,
des seconds moyens de guidage définissant un guidage hélicoïdal qui s'étend suivant l'axe de la vis et qui a un pas inversé par rapport au pas de la vis pour permettre la rotation de l'écrou dans le même sens de rotation que la vis dans une deuxième phase de déplacement de l'écrou où, par exemple, les deux organes sont plus proches l'un de l'autre que dans la première phase de déplacement,
ce qui permet de diminuer le pas apparent de la vis et donc la vitesse en translation de l'écrou dans cette deuxième phase de déplacement.

Ainsi, le dispositif de l'invention repose essentiellement sur l'utilisation d'une vis qui entraîne un écrou, lequel est bloqué en rotation pendant une première phase ou course de déplacement et est ensuite susceptible d'être entraîné en rotation, dans le sens de rotation de la vis, dans une deuxième phase ou course de déplacement.

L'invention procure ainsi un dispositif d'entraînement à rapport cinématique variable, qui consiste en deux parties distinctes : une première partie où l'écrou est bloqué en rotation et une deuxième partie où l'écrou est entraîné en rotation dans le même sens que la vis.

Grâce à la première partie, la vis assure une liaison cinématique pendant une première phase, que l'on peut qualifier de phase inertielle du mouvement.

Pendant cette première phase, l'écrou qui est monté libre en translation est guidé en rotation par les premiers moyens de guidage qui sont fixes et parallèles à l'axe de la vis et qui empêchent donc l'écrou de tourner, et ceci quel que soit le sens de rotation de la vis et celui de l'effort à transmettre. Pendant cette phase inertielle qui permet le rapprochement ou l'éloignement des deux organes (par exemple, fermeture et ouverture d'une pince), la vis tournera généralement à vitesse établie constante. La vitesse de translation (vitesse linéaire) de l'écrou est donc conditionnée par la vitesse angulaire et le pas de la vis.

Pendant la seconde phase de déplacement, les seconds moyens de guidage définissent un guidage hélicoïdal qui oblige l'écrou à tourner en rotation dans le même sens que la vis, ce qui diminue le pas apparent de la vis.

Par conséquent, en supposant que la vis tourne à la même vitesse angulaire que pendant la première phase du mouvement, l'écrou se déplacera alors à une vitesse plus faible, imposée par le pas apparent. En effet, l'écrou "libéré" du guidage linéaire des premiers moyens de guidage va suivre le pas des seconds moyens de guidage.

Ainsi, pendant cette seconde phase de déplacement, la vitesse de translation de l'écrou diminue jusqu'à éventuellement devenir nulle. On a donc une variation apparente du pas jusqu'à l'obtention d'une valeur nulle de celui-ci, si nécessaire.

Il est avantageux d'utiliser une vis de grand pas, donc réversible et à haut rendement, pour assurer la liaison cinématique pendant la phase inertielle du mouvement.

A ce titre, on préfère tout particulièrement utiliser une vis choisie parmi une vis à billes et une vis à filet roulé.

Cette vis aura, de préférence, un petit diamètre, et donc une petite masse, compte tenu de la faiblesse des efforts engendrés pendant la première phase de déplacement. Cette vis assurera ainsi une transmission performante en vitesse et en accélération, avec un ajout d'inertie minimal.

Dans une forme de réalisation préférée de l'invention, les premiers moyens de guidage et les seconds moyens de guidage sont formés par au moins une glissière qui comprend une partie linéaire parallèle à l'axe de la vis pour procurer le guidage linéaire et une partie hélicoïdale qui se raccorde à la partie droite pour procurer le guidage hélicoïdal, et l'écrou est muni d'un élément suiveur propre à se déplacer le long de la glissière.

De préférence, le dispositif comprend au moins une paire de glissières opposées avec lesquelles coopère une paire d'éléments suiveurs portés par l'écrou.

Dans l'invention, on préfère tout particulièrement que le ou chaque élément suiveur soit réalisé sous la forme d'un galet monté fou autour d'un axe perpendiculaire à l'axe de la vis.

On notera que, à l'approche du point de serrage, la réversibilité du système vis-écrou fait que, au travers d'un des éléments suiveurs, celui-ci prend appui sur l'une des glissières ou guides, afin de soulager la vis de l'augmentation du couple et de l'effort axial dû à la diminution apparente du pas.

De ce fait, la part de l'effort repris par l'une des glissières est d'autant plus grande que son pas réel est faible. Il en résulte qu'une grande partie de l'effort est reprise, non pas par la vis, mais par la glissière.

De ce fait, il est possible de diminuer le plus possible le poids de la vis, et donc celui de la motorisation, quel que soit l'effort de serrage souhaité. Il permet, en outre, de conserver toutes les performances dans la première phase de déplacement, encore appelée "phase inertielle".

On comprend que ceci peut être obtenu simplement avec un galet roulant dans une seule gorge. Dans ce cas, il faut prévoir un jeu fonctionnel qui garantit un bon déplacement du galet dans ladite gorge.

Dans une forme de réalisation préférée de l'invention, le dispositif comprend un support cylindrique creux, dans lequel sont logés la vis et l'écrou, et qui présente une paroi cylindrique dans laquelle est formée la ou chaque glissière.

Pour procurer un bon fonctionnement, la ou chaque glissière présente une largeur suffisante pour recevoir l'élément suiveur avec un jeu minimal.

Selon une autre caractéristique de l'invention, le pas établi des seconds moyens de guidage peut être constant ou variable. Le pas établi est celui qui suit la zone de transition entre la partie à guidage linéaire et la partie à guidage hélicoïdal.

Dans l'invention, la vis est avantageusement montée flottante et les moyens de guidage sont avantageusement montés sur des supports conférant une certaine auto-adaptation ("compliance") au système.

De plus, on utilise avantageusement un moteur électrique couplé à un système à commande numérique.

Le dispositif de l'invention comprend avantageusement un support fixe qui porte le moteur et l'un des deux organes, appelé "organe fixe", et un support mobile lié en translation avec l'écrou et portant l'autre des deux organes, appelé "organe mobile".

Sous un autre aspect, l'invention concerne un outil de serrage comprenant deux organes, ou bras, susceptibles d'être rapprochés ou éloignés l'un de l'autre, et cet outil étant équipé d'un dispositif d'entraînement comme défini précédemment.

L'outil de serrage est avantageusement réalisé sous la forme d'une pince, en particulier d'une pince à souder.

Dans la description qui suit, faite seulement à titre d'exemple, on se réfère aux dessins annexés sur lesquels :
- la Figure 1 est une vue partielle en élévation d'un dispositif d'entraînement selon une première forme de réalisation de l'invention ;
- la Figure 2 est une vue d'extrémité du dispositif de la Figure 1 ;
- la Figure 3 est une vue en coupe axiale d'un outil de serrage équipé d'un dispositif d'entraînement selon l'invention ;
- la Figure 4 est une vue partielle en élévation, avec arrachement, d'un dispositif d'entraînement selon une deuxième forme de réalisation de l'invention ; et
- la Figure 5 est une vue en coupe selon la ligne V-V de la figure 4.

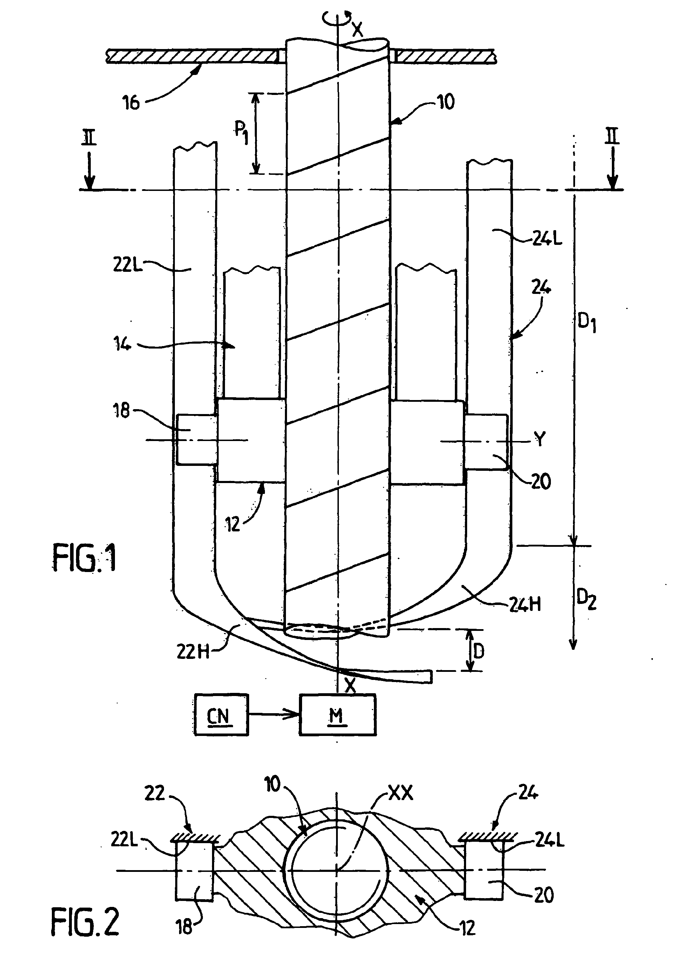

Le dispositif représenté aux Figures 1 et 2 comprend une vis 10 propre à être entraînée en rotation autour d'un axe XX par l'intermédiaire d'un moteur électrique M couplé à une commande numérique CN.

On utilise de préférence une vis à billes ou à filet roulé, ou encore une vis analogue. La vis possède un grand pas P1 et elle est donc réversible et à hauts rendements direct et inverse. Cette vis peut être entraînée en rotation dans un sens ou dans l'autre autour de son axe par l'intermédiaire du moteur M.

La vis coopère avec un écrou 12 susceptible d'être entraîné en translation dans la direction de l'axe XX de la vis. L'écrou 12 est solidaire en translation d'un support 14 réalisé ici sous la forme d'un élément tubulaire qui entoure au moins en partie la vis 10. Ce support est destiné à être relié à un organe mobile 16 représenté ici schématiquement.

Dans l'exemple de réalisation, la vis 10 possède un pas à droite dont la valeur est avantageusement de l'ordre de grandeur de son propre diamètre.

L'écrou 12 est équipé d'une paire de galets 18 et 20 qui forment des éléments suiveurs et qui sont montés en rotation autour d'un axe YY qui est perpendiculaire à l'axe XX de la vis.

Ces deux galets sont destinés à venir rouler respectivement contre deux glissières 22 et 24 encore appelées guides. La glissière 22 comprend une partie linéaire 22L qui s'étend parallèlement à l'axe de la vis pour procurer un guidage linéaire à l'écrou, ainsi qu'une partie hélicoïdale 22H qui se raccorde à la partie linéaire 22L pour procurer un guidage hélicoïdal. Cette partie hélicoïdale s'étend suivant l'axe XX de la vis et possède un pas P2 qui est inversé par rapport au pas P1 de la vis. Dans l'exemple, le pas P2 est un pas à gauche.

De façon correspondante, la glissière 24 comporte une partie linéaire 24L, qui s'étend parallèlement à l'axe XX, et une partie hélicoïdale 24H qui se raccorde à cette partie linéaire pour procurer un guidage hélicoïdal.

Cependant, comme on peut le voir sur la Figure 1, les deux parties hélicoïdales 22H et 24H sont décalées axialement d'une distance qui correspond au diamètre D des galets 18 et 20.

Comme on peut le voir sur la Figure 2, les parties linéaires 22L et 24L des glissières sont situées d'un même côté de l'axe YY et empêchent ainsi l'écrou de tourner, quel que soit le sens de rotation de la vis et celui de l'effort à transmettre. Ainsi, tant que les galets 18 et 20 sont en contact avec les parties 22L et 24L, ces dernières empêchent l'écrou de tourner, et celui-ci se déplace en translation avec une vitesse linéaire imposée par la vitesse angulaire du moteur et le pas P1 de la vis. Ceci constitue une première phase de déplacement D1 (encore appelée course) que l'on peut qualifier aussi de phase inertielle.

A l'approche du point de serrage, c'est-à-dire lorsque l'écrou 12 se rapproche des parties hélicoïdales 22H et 24H, ces dernières entraînent l'écrou en rotation dans le même sens que la rotation de la vis. Il en résulte que la vitesse linéaire de l'écrou diminue jusqu'à éventuellement devenir nulle. En effet, ceci provient d'une variation apparente du pas (en fait, la vitesse linéaire de l'écrou est synchronisée sur le pas P2). Il est à noter que ce pas P2 peut être constant ou variable.

Si l'on suppose, par conséquent, que la vis 10 est entraînée en rotation autour de son axe avec une vitesse angulaire établie constante, l'écrou se déplace d'abord (dans le sens du serrage) avec une vitesse constante pour la phase D1 (phase inertielle) et ensuite avec une vitesse plus lente dans une deuxième phase D2.

Pendant cette deuxième phase, la réversibilité du système vis-écrou fait que, au travers de l'un des deux galets 18 et 20, celui-ci prend appui sur l'une des parties hélicoïdales 22H et 24H, ce qui soulage la vis de l'augmentation du couple et de l'effort axial dû à la diminution apparente du pas résultant.

Ainsi, la part de l'effort repris par l'une des parties hélicoïdales précitées est d'autant plus grande que son pas réel est faible. Il en résulte que l'effort est repris, non pas par la vis, mais par l'une des parties hélicoïdales des moyens de guidage.

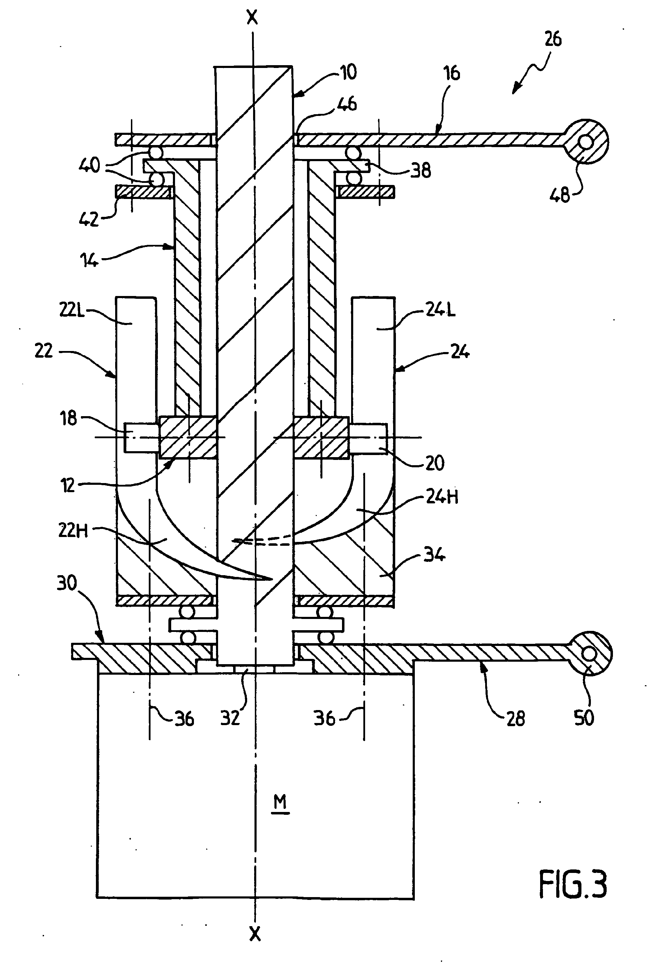

On se réfère maintenant à la Figure 3 qui montre un outil de serrage 26, par exemple une pince à souder, qui comprend un dispositif d'entraînement tel que décrit précédemment et qui est destiné à exercer un déplacement relatif sur deux organes de l'outil. Ces deux organes comprennent un organe mobile 16 (encore appelé bras mobile) et un organe fixe 28 (encore appelé bras fixe).

Les éléments communs avec ceux de la Figure 1 sont désignés par les mêmes références numériques.

Le dispositif comprend un support fixe 30 qui porte le moteur M ainsi que l'organe fixe 28.

La vis 10 est couplée à l'arbre 32 du moteur par l'intermédiaire d'un accouplement flottant.

Les glissières 22 et 24 sont portées par un support 34 qui est traversé par la vis et qui est fixé au support 30 du moteur par l'intermédiaire de moyens de fixation appropriés, par exemple des vis, dont les axes 36 sont représentés sur le dessin. L'ensemble ainsi formé par le support 34 et les vis d'axes 36 comporte la souplesse nécessaire pour conférer au système une certaine auto-adaptation, encore appelée "compliance" (terme anglo-saxon). On assure ainsi un bon fonctionnement au système.

Le support 14, lié à l'écrou 12, est aussi constitué d'un élément tubulaire comme décrit précédemment. Il possède une collerette 38 qui est bloquée axialement, mais non en rotation, par des organes de roulement 40 maintenus entre un anneau 42 formant bague de retenue et un disque 44 solidaire du bras 16 et possédant une ouverture 46 pour le passage de la vis 10.

L'organe mobile 16 et l'organe fixe 28 ont des attaches respectives 48 et 50 susceptibles d'être fixées respectivement aux deux bras de l'outil.

Ces bras peuvent être des bras en ciseaux, c'est-à-dire des bras à déplacement en rotation, ou encore des bras à déplacement linéaire. Il peut s'agir, dans ce dernier cas, de pinces dites en "J", par exemple.

Le point de serrage peut ne pas obligatoirement se situer à une extrémité du mouvement. Il est possible aussi d'envisager des outils comportant un mouvement sur chacun des bras.

Dans ce cas, deux dispositifs selon l'invention, mais à pas inversé, actionnent chacun un bras d'un même outil.

Il est possible aussi d'envisager un réglage facile de la course de l'outil par déplacement relatif du support 14 et des glissières.

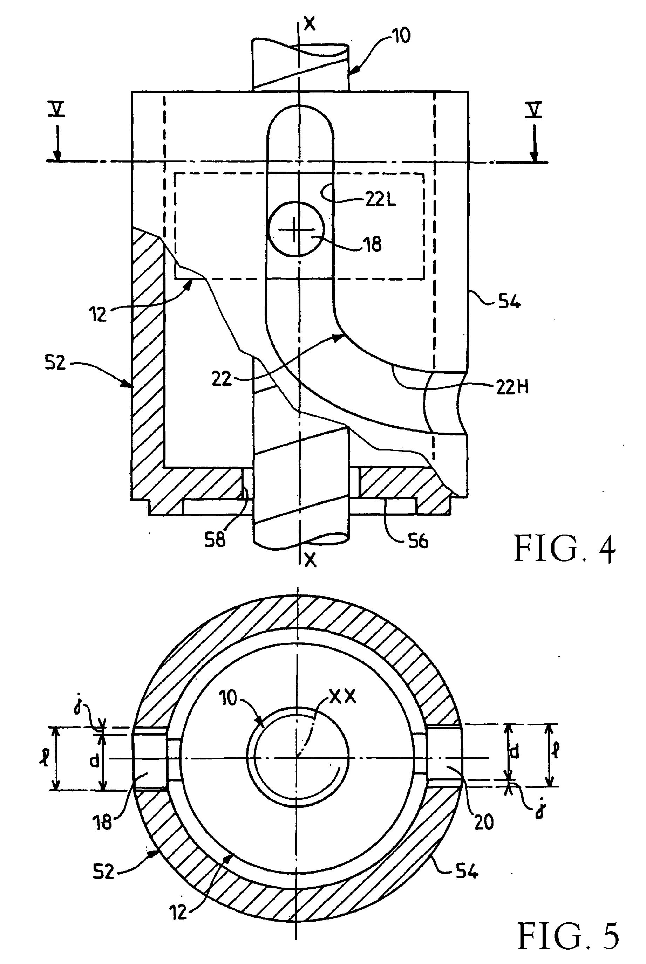

Dans la forme de réalisation des Figures 4 et 5, le dispositif de l'invention comprend un support cylindrique creux 52 dans lequel sont logés la vis 10 et l'écrou 12. Ce support présente une paroi cylindrique 54 d'axe XX et rattachée à une paroi de fond 56 présentant un trou circulaire 58 pour le passage de la vis 10.

Le support cylindrique 52 est avantageusement réalisé en acier. Dans la paroi cylindrique 54 sont taillées deux glissières 22 et 24 dans des positions diamétralement opposées. La glissière 22 comporte une partie linéaire 22L qui se prolonge par une partie hélicoïdale 22H. La glissière 24 (non visible sur la figure 4) présente une forme identique à celle de la glissière 22. Ces deux glissières sont formées directement par élimination de matière de la paroi cylindrique 54 de manière à déboucher chacune à l'intérieur et à l'extérieur du cylindre ainsi formé.

Les glissières peuvent être à simple effet ou à double effet selon qu'elles transmettent les efforts dans un sens, ou dans les deux sens. En fait, la glissière à double effet consiste en deux guidages placés de part et d'autre d'un même galet avec un jeu fonctionnel suffisant.

Dans la forme de réalisation des Figures 4 et 5, les deux glissières 22 et 24 taillées dans la paroi cylindrique 54 sont par nature à double effet, qu'elles soient ou non utilisées dans cette configuration. Ceci dépend essentiellement de la valeur du jeu fonctionnel mentionné ci-dessus.

Quelle que soit la configuration retenue, on disposera les zones de contrainte entre galets et glissières de manière à réduire au minimum l'effort de flexion parasite engendré sur la vis. Ainsi, par exemple, deux glissières à double effet seront diamétralement opposées, trois glissières à double effet seront disposées à 120°, quatre glissières à double effet seront disposées à 90°, et ainsi de suite.

Ainsi, comme on le voit sur les figures 4 et 5, chacune des glissières à double effet présente une largeur 1 suffisante pour recevoir le galet 18 ou 20 correspondant, avec un jeu minimal j. En pratique la largeur 1 est supérieure au diamètre d du galet pour ménager ce jeu minimal j (voir figure 5).

Dans tous les cas, il y a lieu de prévoir un jeu fonctionnel j suffisant pour assurer le bon fonctionnement de l'ensemble. Le montage sur la butée de la vis et sur la bride du moteur se fera dans des conditions de compliance comme défini précédemment.

Il est à noter que le dispositif de l'invention n'est pas limité à l'outillage et que, de façon générale, il peut être appliqué chaque fois qu'une succession de phases inertielles et de phases de serrage se présente sur un mouvement. Ainsi, pendant la deuxième phase de déplacement de l'écrou, les deux organes ne sont pas nécessairement plus proches l'un de l'autre que pendant la première phase de déplacement.

Il entre également dans le cadre de l'invention de prévoir un mécanisme avec une vis à faible pas et avec une ou plusieurs glissières qui, dans la phase inertielle par exemple, augmentent le pas apparent de l'écrou. Toutefois, comme la vis à faible pas assure le serrage, elle devra pouvoir résister seule à l'effort correspondant à ce serrage.

On comprendra qu'il est possible de multiplier le nombre de galets soit sur un même plan, soit sur plusieurs plans, afin d'augmenter l'effort à transmettre. Dans chaque cas, on disposera avantageusement ces galets afin de réduire le plus possible les efforts de flexion parasites sur la vis.

Dans le cas de la structure à support cylindrique creux des Figures 4 et 5, on pourra prévoir des glissières qui ne débouchent pas à l'extérieur du support cylindrique pour ne pas affaiblir ce support cylindrique. Ce résultat peut être obtenu par frettage, usinage, soudage, assemblage, ou tout autre moyen.

L'invention trouve une application préférentielle, mais non limitative, aux pinces de serrage, et en particulier aux pinces à souder.

## Revendications

1. Dispositif d'entraînement pour le déplacement relatif de deux organes, en particulier pour le déplacement des deux bras d'un outil de serrage,
une vis (10) d'un pas donné (P1) propre à être entraînée en rotation autour d'un axe (XX), dans un sens ou dans un sens opposé, sous l'action d'un moteur (M),
un écrou (12) coopérant avec la vis (10) et propre à être entraîné en translation dans la direction de l'axe (XX) de la vis, ledit écrou étant solidaire en translation de l'un (14) des deux organes,
des premiers moyens de guidage (22L, 24L) définissant un guidage linéaire parallèle à l'axe (XX) de la vis (10) pour bloquer la rotation de l'écrou (12) dans une première phase de déplacement (D1) de l'écrou,
**caractérisé en ce qu'**il comprend :
des seconds moyens de guidage (22H, 24H) définissant un guidage hélicoïdal qui s'étend suivant l'axe (XX) de la vis (10) et qui a un pas (P2) inversé par rapport au pas (P1) de la vis pour permettre la rotation de l'écrou (12) dans le même sens de rotation que la vis (10) dans une deuxième phase de déplacement (D2) de l'écrou où, par exemple, les deux organes (16, 28) sont plus proches l'un de l'autre que dans la première phase de déplacement (D1),
ce qui permet de diminuer le pas apparent de la vis (10) et donc la vitesse en translation de l'écrou (12) dans cette deuxième phase de déplacement (D2).

2. Dispositif selon la revendication 1, **caractérisé en ce que** la vis (10) est de type réversible à haut rendement et possède un grand pas et **en ce que** la vis (10) est choisie parmi une vis à billes et une vis à filet roulé.

3. Dispositif selon l'une des revendications 1 et 2, **caractérisé en ce que** les premiers moyens de guidage et les seconds moyens de guidage sont formés par au moins une glissière (22 ; 24) qui comprend une partie linéaire (22L ; 24L) parallèle à l'axe (XX) de la vis (10) pour procurer le guidage linéaire et une partie hélicoïdale (22H ; 24H) qui se raccorde à la partie linéaire pour procurer le guidage hélicoïdal, et **en ce que** l'écrou est pourvu d'un élément suiveur (18 ; 20) propre à se déplacer le long de la glissière.

4. Dispositif selon la revendication 3, **caractérisé en ce qu'**il comprend au moins une paire de glissières (22 ; 24) opposées avec lesquelles coopère une paire d'éléments suiveurs (18 ; 20) portés par l'écrou (12).

5. Dispositif selon l'une des revendications 3 et 4, **caractérisé en ce que** le ou chaque élément suiveur (18 ; 20) est réalisé sous la forme d'un galet monté fou autour d'un axe (YY) perpendiculaire à l'axe (XX) de la vis.

6. Dispositif selon l'une des revendications 3 à 5, **caractérisé en ce qu'**il comprend un support cylindrique creux (52), dans lequel sont logés la vis (10) et l'écrou (12), et qui présente une paroi cylindrique (54) dans laquelle est formée la ou chaque glissière (22, 24).

7. Dispositif selon la revendication 6, **caractérisé en ce que** chaque glissière (22, 24) présente une largeur (1) suffisante pour recevoir l'élément suiveur (18, 20) avec un jeu minimal (j).

8. Dispositif selon l'une des revendications 1 à 7, **caractérisé en ce que** le pas (P2) des seconds moyens de guidage peut être constant ou variable.

9. Dispositif selon l'une des revendications 1 à 8, **caractérisé en ce que** la vis (10) est montée flottante et les moyens de guidage (22, 24) sont montés sur des supports (34, 36) conférant une certaine auto-adaptation ("compliance") au système.

10. Outil de serrage comprenant deux organes (16, 28) susceptibles d'être rapprochés ou éloignés l'un de l'autre, **caractérisé en ce qu'**il est équipé d'un dispositif d'entraînement selon l'une des revendications 1 à 9 pour réaliser le déplacement des organes de l'outil.

## Claims

1. Driving device for the relative displacement of two members, in particular for the displacement of two arms of a clamping tool, comprising :
a screw (10) of a given pitch (P1) capable of being set into rotation about an axis (XX) in one direction or in an opposite direction by a motor (M),
a nut (12) cooperating with the screw (10) and designed to be driven in translation in the direction of the screw axis (XX), said nut being integral in translation with one (14) of the two members,
first guide means (22L, 24L) defining linear guidance parallel to the axis (XX) of the screw (10) to lock the rotation of the nut (12) in a first phase of displacement (D1) of the nut,
**characterised in that** it comprises:
second guide means (22H, 24H) defining helical guidance which extends along the axis (XX) of the screw (10) and which has a reverse pitch (P2) relative to the pitch (P1) of the screw to allow the rotation of the nut (12) in the same direction of rotation as the screw (10) in a second phase of displacement (D2) of the nut where, for example, the two members are closer to one another than in the first phase of displacement (D1),
to enable the transverse pitch of the screw (10) and hence the translational speed of the nut (12) to be decreased in this second phase of displacement (D2)

2. Device according to claim 1, **characterised in that** the screw (10) is of the reversible type with a high yield and has a large pitch and **in that** the screw (10) is selected from among a ball screw and a rolled thread screw.

3. Device according to either of claims 1 and 2, **characterised in that** the first guide means and the second guide means are formed by at least one slideway (22, 24) comprising a linear portion (22L, 24L) parallel to the axis (XX) of the screw (10) to provide the linear guidance and a helical portion (22H; 24H) which is connected to the linear portion to provide helical guidance and **in that** the nut is provided with a tracking component (18; 20) adapted to travel along the slideway.

4. Device according to claim 3, **characterised in that** it comprises at least one pair of opposing slideways (22; 24) with which there cooperates a pair of tracking components (18; 20) carried by the nut (12).

5. Device according to either of claims 3 and 4, **characterised in that** the or each tracking component (18; 20) is produced in the form of a wheel which is mounted idly about an axis (YY) perpendicular to the axis (XX) of the screw.

6. Device according to any of claims 3 to 5, **characterised in that** it comprises a hollow cylindrical support (52) in which the screw (10) and the nut (12) are accommodated and which has a cylindrical wall (54) in which the or each slideway (22, 24)is formed.

7. Device according to claim 6, **characterised in that** each slideway (22, 24) has a width (1) which is sufficient to receive a tracking component (18, 20) with minimal clearance (j) .

8. Device according to any of claims 1 to 7, **characterised in that** the pitch (P2) of the second guide means may be constant or variable.

9. Device according to any of claims 1 to 8, **characterised in that** the screw (10) is mounted in a floating manner and the guide means (22, 24) are mounted on supports (34, 36) which impart a degree of compliance to the system.

10. Clamping tool comprising two members (16, 28) capable of being moved together or apart, **characterised in that** it is equipped with a driving device according to any of claims 1 to 9 for effecting the displacement of the members of the tool.

## Patentansprüche

1. Antriebsvorrichtung zur Relativverschiebung von zwei Organen, insbesondere zur Verschiebung der beiden Arme eines Spannwerkzeugs, mit:
einer Schraubspindel (10) mit einer bestimmten Teilung (P1), drehbar um eine Achse (XX) in einer Richtung oder einer entgegengesetzten Richtung durch einen Motor (M),
einer mit der Schraubspindel (10) kooperierende Spindelmutter (12), translatorisch verschiebbar in der Richtung der Achse (XX) der Schraubspindel, wobei die genannte Spindelmutter translatorisch mit dem einen (14) der beiden Organe verbunden ist,
ersten Führungseinrichtungen (22L, 24L), die eine zur der Achse (XX) parallele Linearführung der Schraubspindel (10) definieren, um die Spindelmutter (12) in einer ersten Phase der Verschiebung (D1) der Spindelschraube zu blockieren,
**dadurch gekennzeichnet, dass** sie umfasst:
zweite Führungseinrichtungen (22H, 24H), die eine helikoidale Führung definieren, die sich gemäß der Achse (XX) der Schraubspindel (10) erstreckt und die eine in Bezug auf die Teilung (P1) der Schraubspindel inverse Teilung (P2) aufweist, um in einer zweiten Verschiebungsphase (D2) der Spindelmutter, in der, zum Beispiel, die beiden Organe (16, 28) sich näher beieinander befinden als in der ersten Verschiebungsphase (D1), die Rotation der Spindelmutter (12) in derselben Rotationsrichtung wie die Schraubspindel (10) zu ermöglichen,
was ermöglicht, die Stirnteilung der Schraubspindel (10) und infolgedessen die Translationsgeschwindigkeit der Spindelmutter (12) in dieser zweiten Verschiebungsphase (D2) zu reduzieren.

2. Vorrichtung nach Anspruch 1, **dadurch gekennzeichnet, dass** die Schraubspindel (10) vom reversiblen Typ mit hohem Wirkungsgrad ist und eine große Teilung besitzt, und dass die Schraubspindel (10) ausgewählt wird zwischen einer Kugelumlaufspindel und einer Kugelrollspindel.

3. Vorrichtung nach einem der Ansprüche 1 und 2, **dadurch gekennzeichnet, dass** die ersten Führungseinrichtungen und die zweiten Führungseinrichtungen durch mindestens eine Gleitschiene (22 ; 24) gebildet werden, die einen linearen Teil (22L ; 24L) parallel zur Achse (XX) der Schraubspindel (10) umfasst, um die lineare Führung zu gewährleisten, sowie einen helikoidalen Teil (22H ; 24H), der sich an den linearen Teil anschließt, um eine helikoidale Führung zu gewährleisten, und **dadurch**, dass die Spindelmutter ein längs der Gleitschiene verschiebbares Mitlaufelement (18 ; 20) umfasst.

4. Vorrichtung nach Anspruch 3, **dadurch gekennzeichnet, dass** sie wenigstens ein Paar entgegengesetzter Gleitschienen (22 ; 24) umfasst, mit denen ein Paar durch die Spindelmutter (12) getragene Mitlaufelemente (18 ; 20) kooperieren.

5. Vorrichtung nach einem der Ansprüche 3 und 4, **dadurch gekennzeichnet, dass** das oder jedes Mitlaufelement (18 ; 20) in Form einer Laufrolle realisiert ist, drehbar um eine zu der Achse (XX) der Schraubspindel senkrechte Achse (YY).

6. Vorrichtung nach einem der Ansprüche 3 bis 5, **dadurch gekennzeichnet, dass** sie einen hohlzylindrischen Träger (52) umfasst, in dem die Schraubspindel (10) und die Spindelmutter (12) gelagert sind und der eine zylindrische Wand (54) aufweist, in der die oder jede Gleitschiene (22, 24) ausgebildet ist.

7. Vorrichtung nach Anspruch 6, **dadurch gekennzeichnet, dass** jede Gleitschiene (22, 24) eine ausreichende Breite (I) aufweist, um das Mitlaufelement (18 ; 20) mit einem minimalen Spiel (j) aufzunehmen.

8. Vorrichtung nach einem der Ansprüche 1 bis 7, **dadurch gekennzeichnet, dass** die Steigung (P2) der zweiten Führungseinrichtungen konstant oder variabel sein kann.

9. Vorrichtung nach einem der Ansprüche 1 bis 8, **dadurch gekennzeichnet, dass** die Schraubspindel (10) schwimmend bzw. schwebend montiert ist und die Führungseinrichtungen (22, 24) auf Träger (34, 36) montiert sind, die dem System eine gewisse Selbstanpassung ("compliance") verleihen.

10. Spannwerkzeug mit zwei Organen (16, 28), die einander angenähert oder von einander entfernt werden können, **dadurch gekennzeichnet, dass** es mit einer Antriebsvorrichtung nach einem der Ansprüche 1 bis 9 ausgerüstet ist, um die Verschiebung der Organe des Werkzeugs zu realisieren.
